# EUROPEAN PATENT APPLICATION

(11) **EP 1 970 838 A2**
(43) Date of publication of application: **17.09.2008**
(21) Application number: 08102217.0
(22) Date of filing: 03.03.2008
(51) Int. Cl.: G06K 7/00

(54) **RFID tag reader and method for calibrating RFID tag reader**

(30) Priority: 15.03.2007 JP 2007066471
(71) Applicant: Sanden Corporation, Isesaki-shi, Gunma 372-8502 (JP)
(72) Inventor: Kuwako, Yuji, Isesaki-shi Gunma 372-8502 (JP); Satou, Masaaki, Isesaki-shi Gunma 372-8502 (JP); Shimamoto, Gaku, Isesaki-shi Gunma 372-8502 (JP); Matsumoto, Naoto, Isesaki-shi Gunma 372-8502 (JP); Tabata, Masaru, Isesaki-shi Gunma 372-8502 (JP)
(74) Representative: Haley, Stephen

(57) **Abstract**

An RFID tag reader having an antenna (200) for communication with an RFID tag (11, 12), a high frequency circuit (110, 120, 160) for processing a communication signal with the RFID tag (11, 12), a signal line (150) for connecting the antenna 200 with the high frequency circuit, and an impedance matching circuit (204) for impedance matching between the antenna (200) and the signal line (150) includes: detection means for detecting a calibration RFID tag (12) provided in a predetermined reading range; and calibration means for calibrating the high frequency circuit (110, 120, 160) or matching circuit (204) so that the calibration RFID tag (12) can be detected by the detection means.

## Description

### Background of the invention

### Field of the invention

The present invention relates to an RFID tag reader for reading without contact a unique number set in an RFID tag applied to an object to be distributed in the field of physical distribution etc.

### Description of the related art

The RFID tag reader of this type (hereinafter referred to simply as a "reader") has essential components of an antenna for communications with an RFID tag and a high frequency circuit connected to the antenna. These components are used in various implementations depending on the use of a reader. For example, when an RFID tag applied to the merchandise displayed on the shelf of a shop is to be read, a thin antenna unit having substantially the same area as the shelf plate is mounted on the upper or bottom surface of the shelf plate. A high frequency circuit is stored in a housing mounted in an appropriate position on the shelf. The high frequency circuit and the antenna unit are connected via a coaxial cable having a predetermined characteristic impedance. The antenna unit is provided with a thin magnetic core having a high permeability such as a ferrite sheet, a loop antenna around the magnetic core, and a matching circuit for impedance matching. Such a reader sequentially reads RFID tags of a number of pieces of merchandise displayed on the shelf, and transmits the read data to equipment such as computers etc.

The reader of this type causes the problem that a reading range becomes narrow if the impedance matching is not appropriate between an antenna and a high frequency circuit. Especially when the RFID tag of the merchandise displayed on a shelf as described above is read, the resonant frequency and the impedance of an antenna can be varied due to the quality of the shelf or the quality, number, direction, etc. of the material of the merchandise displayed on the shelf, thereby failing in maintaining impedance matching. Thus, the RFIDs of some pieces of merchandise displayed on the shelf may not be read.

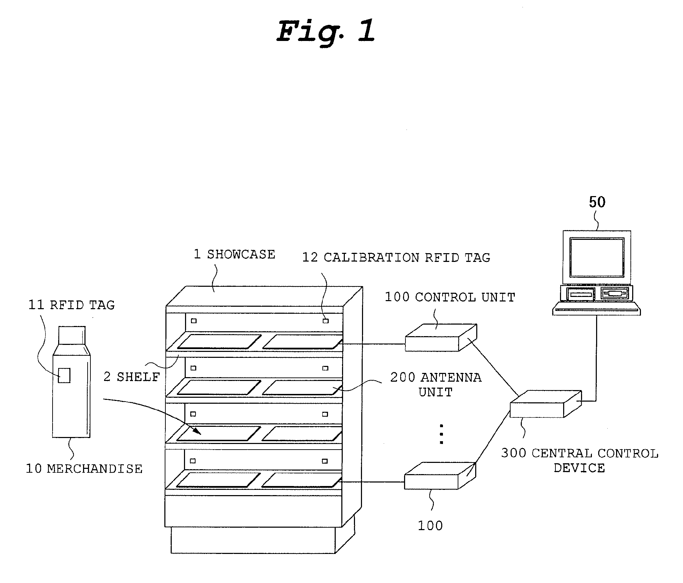

To solve the above-mentioned problems, the Japanese Patent Publication No. 2004-355212 discloses the technology of varying the constant of a matching circuit. According to the technology disclosed by the publication, as shown in FIGS. 1 to 4, a standing-wave ratio, transmission power, etc. are detected on the transmission unit side of the high frequency circuit to control the variation of a constant of the matching circuit provided at the antenna unit based on the detection value. The publication relates to a non-contact IC card, but the basic technology is similar to the technology relating to an RFID tag. Therefore, the technology can also be applied to the RFID tag reader.

However, the technology disclosed by the publication maintains the impedance matching between the transmission unit as a high frequency circuit and the antenna, but does not guarantee correct reading of an RFID tag. To correctly read an RFID tag, the impedance matching is an important element, but can cause an unstable read by various factors such as a change in mounting environment etc.

### Brief summary of the invention

The present invention aims at providing a reader excellent in correctly reading an RFID tag.

To attain the above-mentioned objective, the present application proposes an RFID tag reader including: an antenna for communication with an RFID tag; a high frequency circuit for processing a communication signal with an RFID tag; a signal line for connecting the antenna with the high frequency circuit; an impedance matching circuit for impedance matching between an antenna and a signal line; detection means for detecting a calibration RFID tag provided in a predetermined reading range; and calibration means for calibrating the high frequency circuit or the matching circuit so that the calibration RFID tag can be detected by the detection means.

According to the present invention, the high frequency circuit and the matching circuit are calibrated based on the reading state of an RFID tag provided in a predetermined reading range. Therefore, the optimum calibration can be realized depending on the actual environment, thereby improving the correctness of reading.

As an example of a preferred aspect of the present invention, the calibration means tries to detect the calibration RFID tag and calibrates the high frequency circuit or the matching circuit until the calibration RFID tag is detected.

As another example of a preferred aspect of the present invention, the calibration means tries to detect a plurality of calibration RFID tags and calibrates the high frequency circuit or the matching circuit until the number of detected calibration RFID tags reaches a predetermined threshold. In this case, the calibration means further includes storage means for storing merchandise information about merchandise to which a normal RFID tag is applied, and determines the threshold according to the merchandise information, thereby performing optimum calibration on the merchandise.

The calibrating process can be performed when power is turned on, or performed at predetermined time intervals. In addition, the timing of the calibrating process can be performed based on the number of detected normal RFID tags. Since it is considered that the state in which a magnetic field is formed depends on the number of pieces of merchandise, it is appropriate to perform the calibrating process when the number of detected normal RFID tags greatly changes.

An example of the calibrating process can be a process of variably controlling the constant of the matching circuit, a process of variably controlling the output power of the high frequency circuit.

Other purposes, configurations, and effects of the present invention are clearly described below in detail.

### Brief description of several views of the drawings

FIG. 1 is a view showing the entire configuration of the RFID tag reader according to the first embodiment of the present invention;
FIG. 2 is a block diagram showing the function of the control unit according to the first embodiment of the present invention;
FIG. 3 is a block diagram showing the function of the antenna unit according to the first embodiment of the present invention;
FIG. 4 is a block diagram showing the function of the central control device according to the first embodiment of the present invention;
FIG. 5 is an explanatory view of the output signal of an amplifier;
FIG. 6 is an explanatory view of the control signal;
FIG. 7 is an explanatory view of the transmission signal;
FIG. 8 is a flowchart for describing the entire operation of the reader according to the first embodiment of the present invention;
FIG. 9 is a flowchart for describing the calibrating process of the reader according to the first embodiment of the present invention;
FIG. 10 is an explanatory view of the state of mounting a calibration RFID tag of the reader according to the second embodiment of the present invention;
FIG. 11 is a flowchart for describing the calibrating process of the reader according to the second embodiment of the present invention;
FIG. 12 is a flowchart for describing the calibrating process of the reader according to the third embodiment of the present invention;
FIG. 13 is a flowchart for describing the entire operation of the reader according to the fourth embodiment of the present invention;
FIG. 14 is a block diagram showing the function of the control unit according to the fifth embodiment of the present invention; and
FIG. 15 is a block diagram showing the function of the antenna unit according to the fifth embodiment of the present invention.

### Detailed description of the invention

### (First Embodiment)

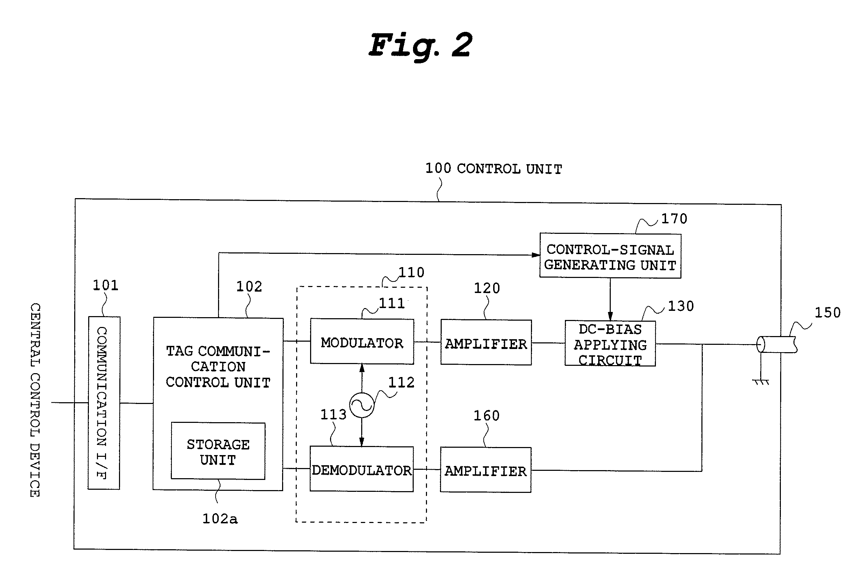

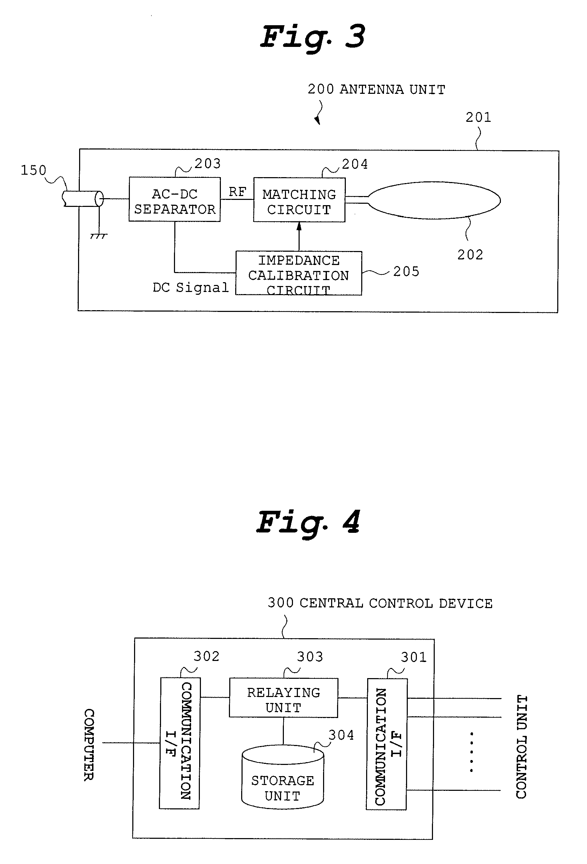

An RFID tag reader according to an embodiment of the present invention is described below with reference to the attached drawings. FIG. 1 is a view showing the entire configuration of an RFID tag reader. FIG. 2 is a block diagram showing the function of a control unit. FIG. 3 is a block diagram showing the function of an antenna unit. FIG. 4 is a block diagram showing the function of the central control device.

The reader according to an embodiment of the present invention is used in reading a unique number (unique identifier) of an RFID tag 11 attached to merchandise 10 displayed in a showcase 1. Generally, a merchandise shelf 2 of the showcase 1 is made of metal having a large influence in forming an electromagnetic field. In addition, the merchandise 10 of various materials is displayed on the merchandise shelf 2, and the number of pieces of displayed merchandise 10 constantly changes. Therefore, when the RFID tags 11 of all the merchandise 10 displayed on the merchandise shelf 2 are read, a calibrating operation is required during the installation and the operation of the reader. In the reader according to the present embodiment, an impedance matching and calibration is performed on an antenna.

The showcase 1 is provided with plural stages of merchandise shelves 2 for display of the merchandise 10, and a cooling mechanism (not shown in the attached drawings) for cooling the merchandise 10. Since the cooling mechanism is similar to that of the related art, the explanation of the mechanism is omitted here. On the top surface of the merchandise shelf 2, an antenna unit 200 for communication with the RFID tag 11 of the displayed merchandise 10 is mounted. Two antenna units 200 are provided on each of the left and right sides on the top surface of the merchandise shelf 2. The showcase 1 is provided with a control unit 100 connected one to one to each antenna unit 200, and a central control device 300 for centrally controlling each control unit 100. The control unit 100 reads from the RFID tag 11 a unique number predetermined for the RFID tag 11 using each antenna unit 200. The central control device 300 compiles the unique number of the RFID tag 11 read by each control unit 100, and transmits the compiled data to a computer 50 provided for a shop. The RFID tag reader according to the present embodiment is configured by connecting the control unit 100 with the antenna unit 200.

On the back plate behind the merchandise shelf 2 of the showcase 1, a calibration RFID tag 12 is attached to each antenna unit 200. The calibration RFID tag 12 is the same type as the RFID tag 11 applied to the merchandise 10, and they are different only in unique number. It is desired that the position in which the calibration RFID tag 12 is mounted is close to the perimeter of the storage space of the merchandise 10, that is, close to the perimeter of the reading range of the RFID tag 11. There is a ferrite sheet as a strong magnetic object between the calibration RFID tag 12 and the back plate. The ferrite sheet suppresses the influence of the back plate when the calibration RFID tag 12 is read. In the following explanation, the RFID tag 11 attached to the merchandise 10 is referred to as a "normal RFID tag" as necessary to discriminate the RFID tag 11 from the calibration RFID tag 12.

As shown in FIG. 2, the control unit 100 is provided with a communication interface 101 for connection with the central control device 300, a tag communication control unit 102 for control of the communication with the RFID tags 11 and 12, a modulator 111 for modulating the output signal of the tag communication control unit 102 to a high frequency signal, an oscillator 112 for generating a carrier wave, an amplifier 120 for amplifying the high frequency signal, and a DC-bias bias applying circuit 130 for applying a direct current bias to a high frequency signal. The DC-bias bias applying circuit 130 is connected to the antenna unit 200 through a connector (not shown in the attached drawings) and a coaxial cable 150. The control unit 100 is further provided with an amplifier 160 for amplifying a high frequency signal received from the antenna unit 200, and a demodulator 113 for demodulating a communication signal from the high frequency signal. Furthermore, the control unit 100 includes a control-signal generating unit 170 for generating a control signal for impedance matching and calibration. The tag communication control unit 102 is provided with a storage unit 102a for storing the unique number of the calibration RFID tag 12. The modulator 111, the demodulator 113, and the oscillator 112 are implemented in a dedicated communication IC 110.

As shown in FIG. 3, the antenna unit 200 is provided in a thin box-shaped housing 201 with an antenna coil 202, forming a loop antenna, and an AC-DC separator 203 connected to the coaxial cable 150 through a connector (not shown in the attached drawings). The AC-DC separator 203 separates the signal received from the control unit 100 into DC components and AC components. The voltage value of the separated DC components is a bias value applied by the DC-bias bias applying circuit 130 of the control unit 100. The separated AC components refer to a high frequency signal output from the amplifier 120 on the transmission side. The antenna unit 200 is provided with an impedance matching circuit 204 and an impedance calibration circuit 205 for controlling the constant of the matching circuit 204.

As shown in FIG. 4, the central control device 300 is provided with a communication interface 301 for connection to the control unit 100, a communication interface 302 for connection to the computer 50, a relaying unit 303 for compiling the unique numbers of the RFID tags 11 received from each control unit 100 and transmitting them to the computer 50, and a storage unit 304 used in a process of compiling the unique numbers in the relaying unit 303. The relaying unit 303 sequentially requests the connected control unit 100 to transmit data, receives the unique numbers of the RFID tags 11 from the control unit 100, and temporarily stores them in the storage unit 304. Then, the relaying unit 303 transmits the information stored in the storage unit 304 to the computer 50. The relaying unit 303 transmits data to the computer 50 only when there is a change in the stored data. That is, the relaying unit 303 transmits only difference information to the computer 50.

Described next is the reading operation of the RFID tags 11 and 12 in the reader. First, the signal processing in the basic operation of the reader is described. The tag communication control unit 102 outputs communication text in accordance with the communication protocol with the RFID tags 11 and 12. The output signal of the tag communication control unit 102 is demodulated by the modulator 111 to a carrier wave provided from the oscillator 112. The high frequency signal output from the modulator 111 is amplified by the amplifier 120, and a direct current bias is applied by the DC-bias bias applying circuit 130 as necessary. The high frequency signal output from the DC-bias bias applying circuit 130 is transmitted to the antenna unit 200 through the coaxial cable 150.

The high frequency signal transmitted to the antenna unit 200 is separated by the AC-DC separator 203 into a DC signal and an AC signal. The DC signal corresponds to the direct current bias applied by the DC-bias bias applying circuit 130. On the other hand, the AC signal corresponds to the high frequency signal output from the modulator 111. The high frequency signal is emitted from the antenna coil 202 through the matching circuit 204. The RFID tags 11 and 12 operate with the received high frequency signal as a power source and emit a response signal. The response signal received by the antenna coil 202 is input to the amplifier 160 on the receiving side through the impedance matching circuit 204, the AC-DC separator 203, and the coaxial cable 150. The high frequency signal amplified by the amplifier 160 is demodulated by the demodulator 113. The demodulated signal is input to the tag communication control unit 102.

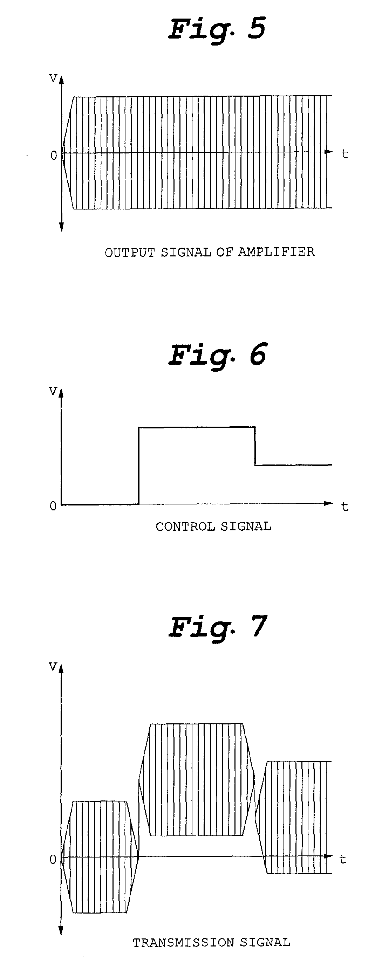

Described next is the signal processing at the impedance matching and calibration of the reader according to the present embodiment. The reader transmits a control signal for the impedance calibration to be transmitted to the antenna unit 200 from the control unit 100 with the high frequency signal using the coaxial cable. A control-signal generating unit 170 outputs a control signal for impedance matching and calibration based on the instruction from the tag communication control unit 102. The control signal is formed by a DC signal, and has a control value associated with a voltage value. The DC-bias bias applying circuit 130 applies the control signal generated by the control-signal generating unit 170 to the high frequency signal output from the amplifier 120 as a direct current bias. FIG. 5 shows the high frequency signal output from the amplifier 120. FIG. 6 shows the control signal output from the control-signal generating unit 170. FIG. 7 shows the superposition signal (transmission signal) output from the DC-bias bias applying circuit 130.

The superposition signal having a control signal applied as a direct current bias is separated into a control signal and a high frequency signal in the AC-DC separator 203 of the antenna unit 200. The impedance calibration circuit 205 calibrates the constant of the impedance calibration circuit 205 based on the voltage value of the control signal, that is, the direct current bias value of the signal transmitted on the coaxial cable 150. For example, the matching circuit 204 is provided with one or more serial circuits of a predetermined impedance element and a switch element such as a transistor, a relay switch, etc. The impedance calibration circuit 205 switches the on/off state of the switch element based on the voltage value of a control signal, thereby switching the constant of the matching circuit 204.

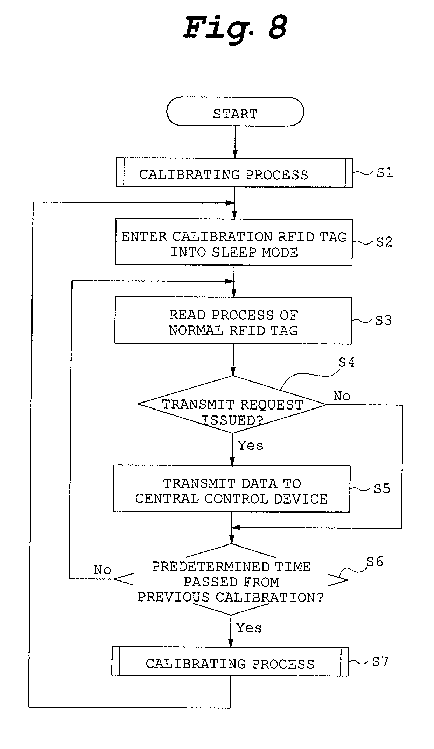

The entire operation of the reader according to the present embodiment is now described below with reference to the flowchart shown in FIG. 8. When the tag communication control unit 102 of the reader starts its operation at the power-up or reset, it first performs a calibrating process described later (step S1). Then, the tag communication control unit 102 instructs the calibration RFID tag 12 to enter sleep mode (step S2). Next, the tag communication control unit 102 performs a process of reading the normal RFID tag 11 (step S3). When the tag communication control unit 102 detects a data transmit request from the central control device 300 (step S4), the unit answers the central control device 300 with the normal information about the RFID tag 11 detected in step S2 (step S5). The tag communication control unit 102 continues the processes in steps S3 to S5. If a predetermined time period has passed since the previous calibrating process was performed (step S6), the tag communication control unit 102 performs the calibrating process described later (step S7). Then, the tag communication control unit 102 instructs the calibration RFID tag 12 to change to a sleep mode (step S2), and the processes in steps S3 to S5 are continued.

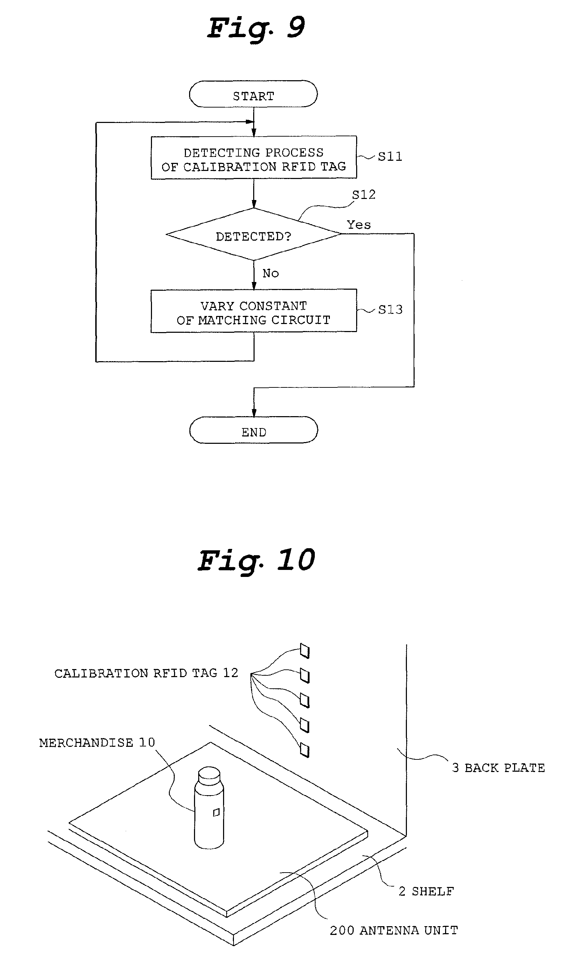

Next, the calibrating processes in steps S1 and S7 is described in detail with reference to the flowchart shown in FIG. 9. The tag communication control unit 102 specifies the unique number of the calibration RFID tag 12 stored in the storage unit 102a, and tries detecting the calibration RFID tag 12 (step S11). When no tag is detected, the tag communication control unit 102 varies the control signal output by the control-signal generating unit 170 (steps S12 and S13). There are various methods as variable algorithms of the control signal. For example, a method of gradually changing the variable range from the maximum value to the minimum value, a method of gradually changing from the minimum value to the maximum value inversely, etc. can be used. The tag communication control unit 102 stops varying the control signal when the calibration RFID tag 12 is detected, and afterwards controls the control signal such that it can be transmitted from the control-signal generating unit 170. The control signal is transmitted to the antenna unit 200 as described above, and used in calibrating the impedance.

The above-mentioned reader is provided with the calibration RFID tag 12 in addition to the normal RFID tag 11, and calibrates the impedance matching such that the calibration RFID tag 12 can be detected, thereby correctly improving the accuracy of reading the RFID tag 11. Since the calibrating process is performed not only in the initial process such as when power is turned on or reset, but also at predetermined time intervals, the accuracy of reading the RFID tag 11 can be constantly improved.

Since the high frequency signal for communication with the RFID tags 11 and 12 and the signal for impedance matching and calibration can be transmitted via one coaxial cable 150, the mounting operability and the impedance matching and calibration function can be compatibly obtained.

### (Second Embodiment)

Described below of the RFID tag reader according to the second embodiment of the present invention. Generally, the merchandise 10 displayed on the merchandise shelf 2 has a different height of the merchandise depending on the type of the merchandise, and a different height of the RFID tag 11. Then, according to the present embodiment, a plurality of calibration RFID tags 12 are vertically arranged on a back plate 3 behind the merchandise shelf 2 as shown in FIG. 10. The tag communication control unit 102 selects the calibration RFID tag 12 for use in the calibrating process for each type of merchandise 10 from among the plurality of calibration RFID tags 12. To perform the process, the tag communication control unit 102 stores in the storage unit 102a the height information about the merchandise 10. Other configurations are the same as those according to the first embodiment of the present invention.

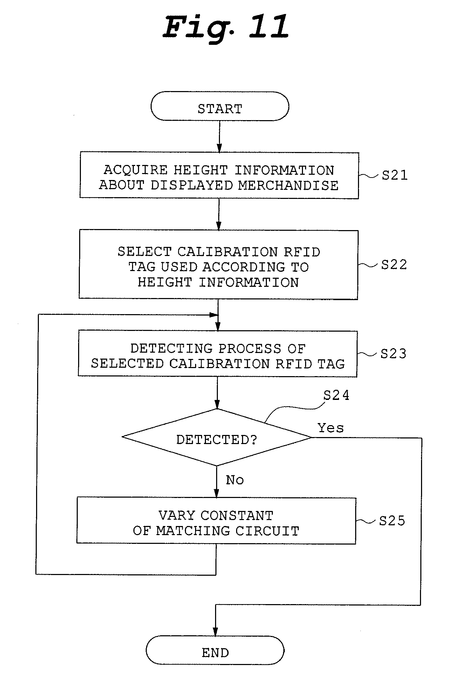

The almost operation of the reader according to the present embodiment is similar to that according to the first embodiment described above with reference to the flowchart shown in FIG. 8. According to the present embodiment, the calibrating processes in steps S1 and S7 shown in FIG. 8 are different from those according to the first embodiment. The operation performed in the calibrating process is described below with reference to the flowchart shown in FIG. 11.

The tag communication control unit 102 acquires the height information about the merchandise 10 stored in the storage unit 102a (step S21), and selects the calibration RFID tag 12 used according to the acquired height information (step S22). Next, the tag communication control unit 102 acquires the unique number of the selected calibration RFID tag 12 from the storage unit 102a, and tries to detect the calibration RFID tag 12 by specifying the unique number (step S23). When the tag cannot be detected, the tag communication control unit 102 varies the control signal output by the control-signal generating unit 170 (steps S24 and S25). The variable algorithm etc. of the control signal is similar to that according to the first embodiment. The tag communication control unit 102 stops varying the control signal when the calibration RFID tag 12 can be detected, and afterwards controls such that the control signal can be transmitted from the control-signal generating unit 170.

According to the reader according to the present embodiment, the optimum calibration RFID tag 12 is selected based on the height of the displayed merchandise 10, and the calibrating process is performed using the calibration RFID tag 12, thereby realizing the optimum calibrating process. Other operations and effects are similar to those according to the first embodiment.

According to the present embodiment, the calibration RFID tag 12 is selected according to the height information about the merchandise 10, but can also be selected according to other merchandise information. For example, the information can be the material quality, the permeability, etc. of the merchandise.

### (Third Embodiment)

Described below is the RFID tag reader according to the third embodiment of the present invention. The difference of the present embodiment from the first embodiment is that there are a plurality of calibration RFID tags 12. A plurality of calibration RFID tags 12 are attached to different positions along the perimeter of each reading range. For example, they are attached to the upper right and left portions of the back plate behind the merchandise shelf 2, and the right and left front portions and the center portion of the ceiling (reverse of the merchandise shelf 2 of the upper stage) of the merchandise shelf 2. Other configurations are similar to those according to the first embodiment.

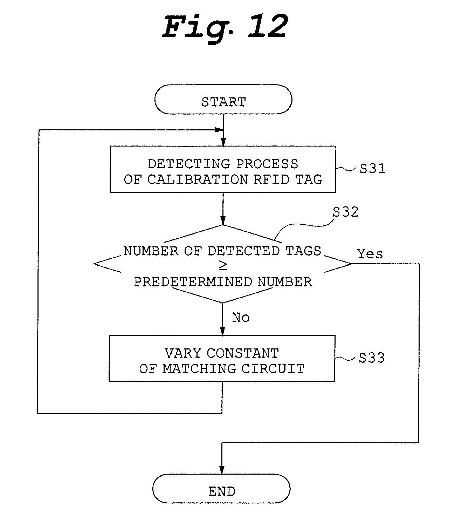

The entire operation of the reader according to the present embodiment is similar to that according to the first embodiment described above with reference to the flowchart shown in FIG. 8. On the other hand, in the present embodiment, the calibrating processes in steps S1 and S7 shown in FIG. 8 are different from those according to the first embodiment. The operation during the calibrating process is described below with reference to the flowchart shown in FIG. 12.

As shown in FIG. 12, the tag communication control unit 102 acquires the unique numbers of all calibration RFID tags 12 from the storage unit 102a, specifies the unique number, and tries detecting a calibration RFID tag (step S31). Next, when the number of detected calibration RFID tags 12 is smaller than a predetermined number, the tag communication control unit 102 varies the control signal output by the control-signal generating unit 170 (steps S32 and S33). The variable algorithm etc. is similar to that according to the first embodiment. The tag communication control unit 102 stops varying the control signal when the number of detected calibration RFID tags 12 reaches or exceeds a predetermined number, and afterwards controls such that the control-signal generating unit 170 transmits the control signal.

Since a plurality of calibration RFID tags 12 are provided for the reader according to the present embodiment, the optimum calibrating process can be performed. Other operations and effects are similar to those according to the first embodiment.

According to the present embodiment, a plurality of calibration RFID tags 12 are provided in the positions apart from the antenna unit 200, but the calibration RFID tag 12 can also be attached to the antenna unit 200. In this case, an occurrence of an abnormal condition on the antenna unit 200, the coaxial cable 150, etc. can be recognized by no detection of the calibration RFID tag 12 attached to the antenna unit 200.

### (Fourth Embodiment)

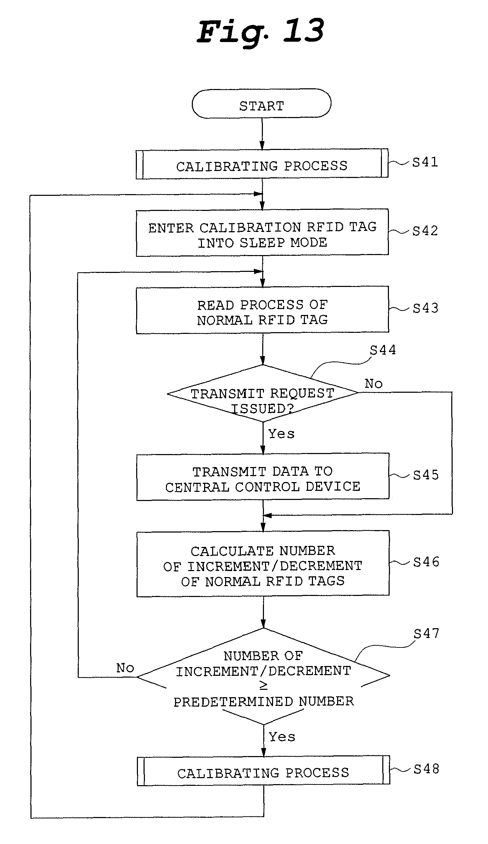

Described below is the RFID tag reader according to the fourth embodiment of the present invention. The difference of the present embodiment from the first embodiment is the timing with which the calibrating process is performed. That is, the calibrating process is performed at predetermined time intervals according to the first embodiment, but the calibrating process is performed based on the number of detected normal RFID tags 11 according to the present embodiment. Other configurations and operations in the calibrating process are similar to those according to the first embodiment. The entire operation of the reader according to the present embodiment is described below with reference to the flowchart shown in FIG. 13.

When the tag communication control unit 102 of the reader starts its operation when power is turned on or reset, it first performs the calibrating process (step S41). Next, the tag communication control unit 102 instructs the calibration RFID tag 12 to enter the sleep mode (step S42). Next, the tag communication control unit 102 performs the process of reading the normal RFID tag 11 (step S43). When the tag communication control unit 102 detects a data transmit request from the central control device 300 (step S44), it sends the information about the normal RFID tag 11 detected in step S42 to the central control device 300 (step S45). The tag communication control unit 102 continues the processes in steps S43 to S45. In addition, the tag communication control unit 102 calculates the absolute value of the difference between the number of the normal RFID tags 11 detected in step S42 and the number of detected normal RFID tags 11 stored when the previous calibrating process is performed, and acquires the detected number of increment or decrement of the normal RFID tags 11 (step S46). Next, the tag communication control unit 102 performs the calibrating process when the increment or decrement reaches or exceeds a predetermined number (steps S47 and S48). Then, the tag communication control unit 102 instructs the calibration RFID tag 12 to enter the sleep mode (step S42), and continues the processes in steps S43 to S45.

Generally, one of the factors of a change in accuracy of reading can be the increment or decrement of the merchandise 10. According to the present embodiment, when there is an increment or decrement equal to or exceeding a predetermined number, the calibrating process is performed, thereby improving the accuracy of reading the RFID tag 11. Other operations and effects are similar to those according to the first embodiment. Although the present embodiment is described as a variation of the first embodiment, there can be similar variations of the second and third embodiments.

### (Fifth Embodiment)

Described below is the RFID tag reader according to the fifth embodiment of the present invention. The difference of the present embodiment from the first embodiment is its object to be calibrated in the calibrating process. Practically, the impedance matching and calibration is performed in the first embodiment, but the output power of a high frequency circuit is calibrated in the present embodiment. The difference is described below in detail.

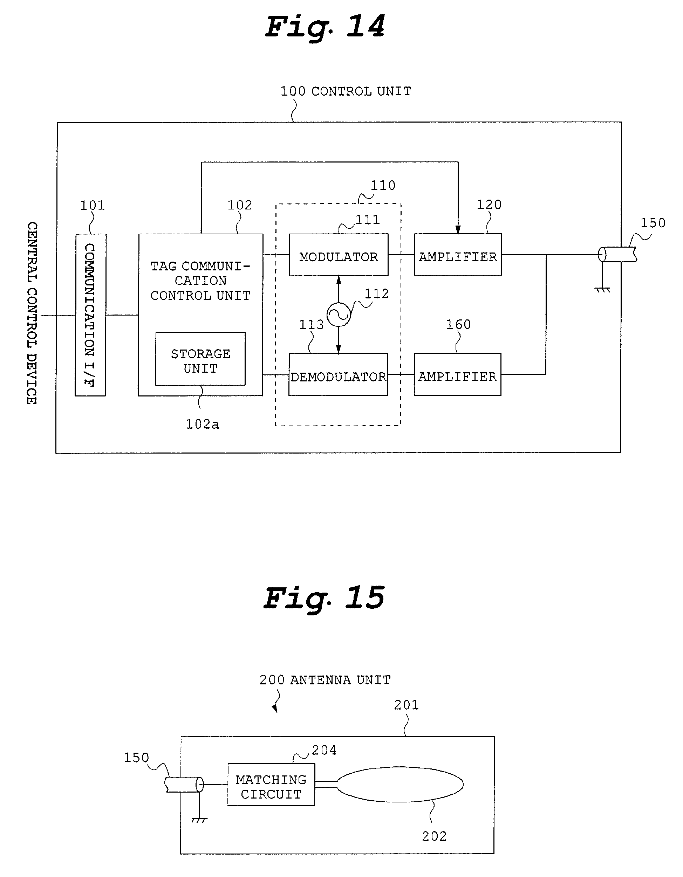

As shown in FIG. 14, the control unit 100 of the reader according to the present embodiment is the control unit 100 according to the first embodiment without the DC-bias bias applying circuit 130 and the control-signal generating unit 170. The amplifier 120 on the transmission side of the control unit 100 has variable output power by the control of the tag communication control unit 102. As shown in FIG. 15, the antenna unit 200 according to the present embodiment is the antenna unit 200 according to the first embodiment without the AC-DC separator 203 and the impedance matching circuit 204.

In this reader, the tag communication control unit 102 of the control unit 100 can perform output calibration of the amplifier 120 on the transmission side in place of the calibrating process of the matching circuit in step S13 shown in FIG. 8 according to the first embodiment. Other operations and effects of the reader according to the present embodiment are similar to those in the first embodiment.

The reader according to the present embodiment is a variation of the first embodiment, but there can be similar variations of the second to fourth embodiments. In addition, the impedance matching and calibration according to the first to fourth embodiments can be combined with the calibration of the output power according to the present embodiment.

The embodiments of the present invention have been described above in detail, but the present invention is not limited only to those embodiments. For example, in the first to fourth embodiments above, the control signal for the impedance matching and calibration is superposed on the coaxial cable 150, but a signal line for transmission of a control signal can be provided to separately transmit a high frequency signal and a control signal. Furthermore, in the first to fourth embodiments of the present invention, the control signal is superposed as a direct current bias on the high frequency signal as a method of superposing the high frequency signal on the control signal, but other superposing and transmitting methods can be used.

In each of the embodiments above, a unique number of the calibration RFID tag 12 is stored in advance in the storage unit 102a of the tag communication control unit 102, but it is preferable in the aspect of operation if the unique number of the calibration RFID tag 12 is read in the setting process etc. and the unique number is stored in the storage unit 102a.

In each of the above-mentioned embodiments, the showcase 1 is exemplified for display of the merchandise 10, but the RFID tag reader according to the present invention can also be used for a shelf without a cooling mechanism.

## Claims

1. An RFID tag reader, comprising:
an antenna (200) for communication with an RFID tag (11, 12);
a high frequency circuit (110, 120, 160) for processing a communication signal with the RFID tag (11, 12);
a signal line (150) for connecting the antenna (200) with the high frequency circuit (110, 120, 160);
an impedance matching circuit (204) for impedance matching between the antenna (200) and the signal line (150);
detection means for detecting a calibration RFID tag (12) provided in a predetermined reading range; and
calibration means for calibrating the high frequency circuit (110, 120, 160) or the matching circuit (204) so that the calibration RFID tag (12) can be detected by the detection means.

2. The RFID tag reader according to claim 1, wherein
the calibration means tries to detect a calibration RFID tag (12) and calibrates the high frequency circuit (110, 120, 160) or the matching circuit (204) until the calibration RFID tag (12) is detected.

3. The RFID tag reader according to claim 1, wherein
the calibration means tries to detect a plurality of calibration RFID tags (12) and calibrates the high frequency circuit (110, 120, 160) or the matching circuit (204) until a number of detected calibration RFID tag (12) reaches a predetermined threshold.

4. The RFID tag reader according to claim 3, wherein
the calibration means includes storage means (102a) for storing merchandise information about merchandise (10) to which a normal RFID tag (11) is applied, and determines the threshold according to the merchandise information.

5. The RFID tag reader according to claims 1, 2, 3, and 4, wherein
the calibration means performs the calibrating process when power is turned on.

6. The RFID tag reader according to claims 1, 2, 3, 4, and 5, wherein
the calibration means performs the calibrating process at predetermined time intervals.

7. The RFID tag reader according to claims 1, 2, 3, 4, 5, and 6, wherein
the calibration means performs the calibrating process based on a number of detected normal RFID tag (11).

8. The RFID tag reader according to claims 1, 2, 3, 4, 5, 6, and 7, wherein
the calibration means performs the calibrating process by changing a constant of the matching circuit (204).

9. The RFID tag reader according to claims 1, 2, 3, 4, 5, 6, and 7, wherein
the calibration means performs the calibrating process by changing output power of the high frequency circuit (110, 120, 160).

10. A method for calibrating an RFID tag reader having an antenna (200) for communication with an RFID tag (11, 12), a high frequency circuit (110, 120, 160) for processing a communication signal with the RFID tag (11, 12), a signal line (150) for connecting the antenna (200) with the high frequency circuit (110, 120, 160), and an impedance matching circuit (204) for impedance matching between the antenna (200) and the signal line (150), comprising:
providing a calibration RFID tag (12) in a predetermined reading range; and
calibrating the high frequency circuit (110, 120, 160) or the matching circuit (204) so that the calibration RFID tag (12) can be detected.
